Europäisches Patentamt

(19) European Patent Office (11) Numéro de publication: **0 065 711**

Office européen des brevets **B1**

(12) **FASCICULE DE BREVET EUROPEEN**

(45) Date de publication du fascicule du brevet: **19.09.84** (51) Int. Cl.³: **G 06 F 1/04, H 04 L 7/00**

(21) Numéro de dépôt: **82104168.8**

(22) Date de dépôt: **13.05.82**

(54) **Dispositif à horloge dupliquée à haute sécurité de fonctionnement.**

(30) Priorité: **20.05.81 FR 8110022**

(43) Date de publication de la demande:
**01.12.82 Bulletin 82/48**

(45) Mention de la délivrance du brevet:
**19.09.84 Bulletin 84/38**

(84) Etats contractants désignés:
**BE DE FR GB IT**

(56) Documents cités:
**DE-A-2 157 982**
**FR-A-2 315 736**
**FR-A-2 433 878**
**US-A-4 185 245**

**IEEE COMPUTER SOCIETY, THE NINTH
ANNUAL INTERNATIONAL SYMPOSIUM ON
FAULT-TOLERANT COMPUTING, 20-22 juin
1979, pages 33-39, Madison, Wisconsin;
F.T.C.S.-9; IEEE catalog no. 79CH1396-IC D.W.
LEWIS: "A fault-tolerant clock using standby
sparing".**

(73) Titulaire: **LA TELEPHONIE INDUSTRIELLE ET
COMMERCIALE TELIC ALCATEL Société
Anonyme dite:
206 Route de Colmar
F-67023 Strasbourg Cedex (FR)**

(72) Inventeur: **Gass, Raymond
18, rue des Vergers Bolsenheim
F-67150 Erstein (FR)**

(74) Mandataire: **Weinmiller, Jürgen et al
Zeppelinstrasse 63
D-8000 München 80 (DE)**

Courier Press, Leamington Spa, England.

## Description

L'invention concerne un dispositif à horloge dupliquée à haute sécurité de fonctionnement. Une horloge dupliquée est utilisée par exemple dans les centraux de télécommunications pour piloter un périphérique; elle comprend deux horloges qui élaborent chacune des signaux de temps nécessaires pour piloter les organes du périphériques.

Dans le cas d'un central de télécommunications chaque horloge est généralement pilotée par trois bases de temps de grande fiabilité, chaque base de temps délivrant un signal d'horloge et un signal de synchronisation. Chaque horloge reçoit généralement les trois signaux d'horloge des trois bases de temps sur un premier circuit majoritaire qui délivre un signal majoritaire à partir duquel elle élabore des signaux de temps qui seront délivrés au périphérique, le signal d'horloge majoritaire pouvant être également utilisé dans le périphérique pour piloter certains organes.

Chaque horloge d'une horloge dupliquée reçoit également, par exemple, les trois signaux de synchronisation des trois bases de temps sur un deuxième circuit majoritaire qui délivre un signal de synchronisation majoritaire qui est pris en compte par le signal d'horloge majoritaire.

Le signal d'horloge majoritaire est généralement filtré et remis en forme dans un circuit de filtrage et de mise en forme avant d'être utilisé pour l'élaboration des signaux de temps et pour la prise en compte du signal de synchronisation majoritaire.

Une horloge d'une horloge dupliquée est reliée à une partie des organes du périphérique, l'autre horloge étant reliée à une autre partie des organes du même périphérique. Lorsque l'une des horloges tombe en panne, il en résulte la mise hors service du périphérique, cette panne pouvant se situer à n'importe quel niveau dans l'horloge. Par ailleurs les signaux d'horloge obtenus en sortie du circuit de filtrage et de mise en forme de chaque horloge peuvent être déphasés; ce déphasage se retrouve entre les signaux de temps délivrés par chaque horloge ce qui peut nuire au bon fonctionnement du périphérique et le mettre hors service lorsque ce déphasage est trop important.

La présente invention a pour but d'augmenter la sécurité de fonctionnement d'une horloge dupliquée et de diminuer ainsi les causes de mise hors service d'un périphérique, et d'une manière général du dispositif auquel elle délivre les signaux de temps.

L'invention a pour objet un dispositif à horloge dupliquée avec haute sécurité de fonctionnement comportant une première et une deuxième horloge, identiques, ayant chacune un circuit majoritaire recevant trois signaux d'horloge de trois bases de temps et délivrant un signal d'horloge majoritaire à un circuit de filtrate et de mise en forme qui délivre un signal d'horloge reconstitué, caractérisé par le fait qu'il comprend dans chaque horloge un circuit de choix constitué par un premier et un deuxième circuit de traitement, identiques, et un circuit de sortie relié en entrée à chacun des circuits de traitement, que chaque circuit de traitement est relié en entrée au circuit de filtrage et de mise en forme de chacune des horloges et comporte une bascule et des portes logiques, que la bascule du premier circuit de traitement a une entrée signal reliée au circuit de filtrage et de mise en forme de la première horloge et une entrée horloge reliée au circuit de filtrage et de mise en forme de la deuxième horloge, que la bascule du deuxième circuit de traitement a une entrée signal reliée au circuit de filtrage et de mise en forme de la deuxième horloge, et une entrée horloge reliée au circuit de filtrage et de mise en forme de la première horloge, et que le circuit de choix réalise l'équation logique

$$w = \overline{(q1 + \overline{q2})} \cdot w1 + \overline{(\overline{q1} + q2)} \cdot w2$$

dans laquelle

— w est un signal d'horloge délivré par le circuit de choix
— w1 et w2 sont respectivement, les signaux d'horloge reconstitués des deux horloges,
— q1 et $\overline{q1}$ sont des signaux de sortie direct et inverse de la bascule du premier circuit de traitement,
— q2 et $\overline{q2}$ sont des signaux de sortie direct et inverse de la bascule du second circuit de traitement.

L'invention va être décrite à l'aide d'exemples de réalisation illustrés par les figures annexées dans lesquelles:

— la figure 1 est un schéma d'une horloge dupliquée utilisant le dispositif de l'invention
— la figure 2 est un schéma d'un dispositif de l'invention,
— la figure 3 est un schéma d'une variante du dispositif de l'invention.
— les figures 4, 5, 6 sont des chronogrammes de signaux en différents points du circuit de choix, pour trois cas de fonctionnement.

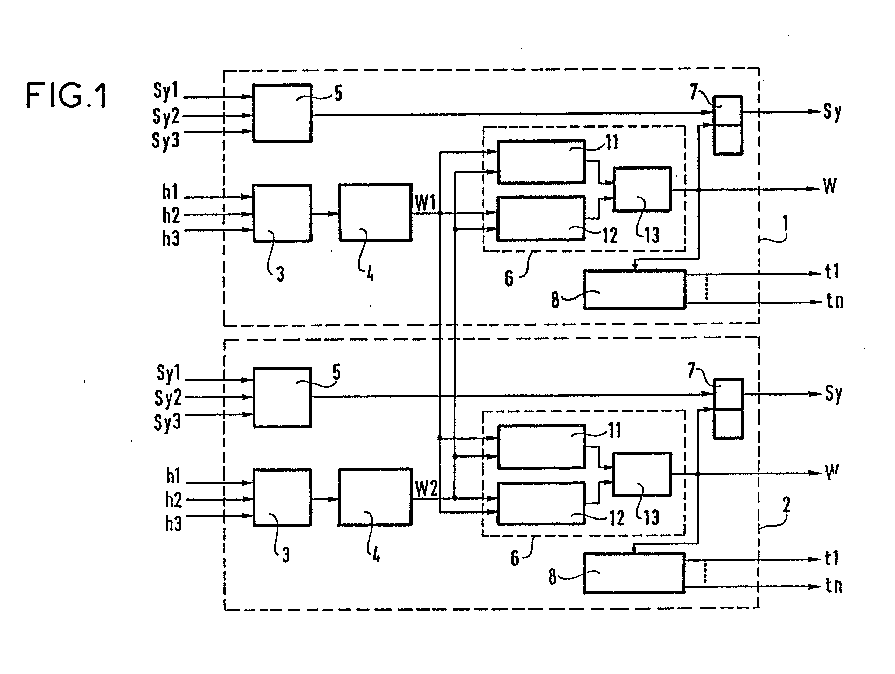

La figure 1 représente une horloge dupliquée constituée de deux horloges 1 et 2. Chaque horloge comprend un premier circuit majoritaire 3 recevant des signaux d'horloge h1, h2, h3 de trois bases de temps, et un deuxième circuit majoritaire 5 recevant des signaux de synchronisation Sy1, Sy2, Sy3 des trois bases de temps. Le premier circuit majoritaire 3 délivre un signal d'horloge majoritaire à un circuit de filtrage et de mise en forme 4 lequel délivre un signal d'horloge reconstitué w1 pour l'horloge 1 et w2 pour l'horloge 2. Un circuit de choix 6 reçoit, dans chaque horloge, les signaux d'horloge reconstitués w1 et w2, et délivre en sortie un signal d'horloge w.

Un registre unitaire 7 reçoit un signal de synchronisation majoritaire du deuxième circuit majoritaire 5, et est piloté par le signal d'horloge w; il délivre un signal de synchronisation Sy.

Un circuit d'élaboration de signaux de temps 8 reçoit le signal d'horloge w; il élabore par division du signal d'horloge w, différents signaux de temps t1 à tn.

Chaque circuit de choix 6 comprend un premier circuit de traitement 11, un deuxième circuit de traitement 12 et un circuit de sortie 13. Les premier et deuxième circuits de traitement reçoivent les signaux d'horloge reconstitués w1 et w2; le premier circuit de traitement 11 est commandé par le signal d'horloge reconstitué w2 et le deuxième circuit de traitement 12 est commandé par le signal d'horloge reconstitué w1.

Le dispositif pour augmenter la sécurité de fonctionnement d'une horloge dupliqué est donc constitué par les deux circuits de choix 6 situés chacun dans une horloge.

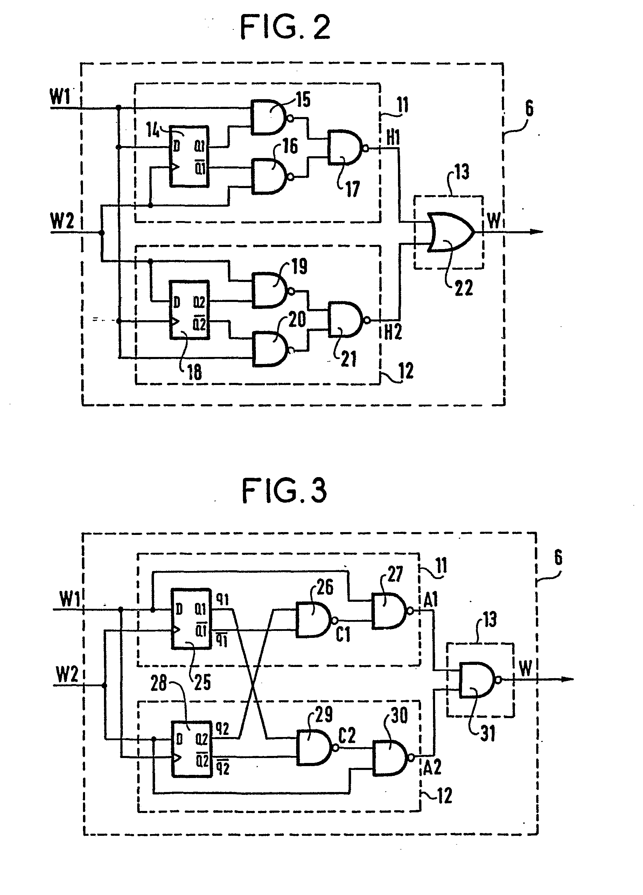

La figure 2 illustre une première forme de réalisation du circuit de choix 6 de la figure 1. Le premier circuit de traitement 11 comprend une bascule 14 de type D par exemple, et trois portes ET-NON (NAND) 15, 16, 17. La bascule 14 reçoit le signal d'horloge reconstitué w1 sur son entrée signal D, et le signal d'horloge reconstitué w2 sur son entrée horloge; sa sortie directe Q1 est reliée à une entrée de la porte ET-NON 15 dont une autre entrée reçoit le signal d'horloge reconstitué w1; sa sortie inverse $\overline{Q1}$ est reliée à une entrée de la porte ET-NON 16 qui reçoit sur une autre entrée le signal d'horloge reconstitué w2. La porte ET-NON 17 a une entrée reliée à la sortie de la porte ET-NON 15 et une autre entrée reliée à la sortie de la porte ET-NON 16.

Le deuxième circuit de traitement 12 est identique au premier circuit de traitement 11. Il comprend donc une bascule 18 et trois portes ET-NON 19, 20, 21. La bascule 18 reçoit le signal d'horloge reconstitué w2 sur son entrée signal D et le signal d'horloge reconstitué w1 sur son entrée horloge; sa sortie directe Q2 est reliée à une entrée de la porte ET-NON 19 dont une autre entrée reçoit le signal d'horloge reconstitué w2, et sa sortie inverse $\overline{Q2}$ est reliée à une entrée de la porte ET-NON 20 qui reçoit sur une autre entrée le signal d'horloge reconstitué w1. La porte ET-NON 21 a une entrée reliée à la sortie de la porte ET-NON 19 et une autre entrée reliée à la sortie de la porte ET-NON 20.

Le circuit de sortie 13 est constitué par une porte OU 22 ayant une entrée reliée à la sortie de la porte ET-NON 17 du premier circuit de traitement 11, et une autre entrée reliée à la sortie de la porte ET-NON 21 du deuxième circuit de traitement 12. La porte OU 22 délivre le signal d'horloge w.

En désignant par H1 le signal de sortie de la porte ET-NON 17, par H2 le signal de sortie de la porte ET-NON 21, par q1, $\overline{q1}$, les signaux sur les sorties Q1 et $\overline{Q1}$ de la bascule 14 et par q2, $\overline{q2}$ les signaux sur les sorties Q2 et $\overline{Q2}$ de la bascule 18, on a les équations logiques suivantes:

$$H1 = q1 \cdot w1 + \overline{q1} \cdot w2$$

$$H2 = q2 \cdot w1 + \overline{q2} \cdot w1$$

$$w = H1 + H2$$

$$w = (q1 + \overline{q2}) \cdot w1 + (\overline{q1} + q2)w2. \quad (1)$$

La figure 3 illustre une deuxième forme de réalisation du circuit de choix 6 de la figure 1. Le premier circuit de traitement 11 comprend une bascule 25, de type D par exemple, et deux portes ET-NON 26, 27; le deuxième circuit de traitement 12 est identique au premier circuit de traitement 11 et comporte une bascule 28 et deux portes ET-NON 29, 30; le circuit de sortie 13 est constitué par une porte ET-NON 31. La bascule 25 reçoit le signal d'horloge reconstitué w1 sur son entrée signal D et le signal d'horloge reconstitué w2 sur son entrée horloge; sa sortie Q1 est reliée à une entrée de la porte ET-NON 29 du deuxième circuit de traitement, et sa sortie $\overline{Q1}$ est reliée à une entrée de la porte ET-NON 26. La bascule 28 reçoit le signal d'horloge reconstitué w2 sur son entrée signal D et le signal d'horloge reconstitué w1 sur son entrée horloge; sa sortie Q2 est reliée à une entrée de la porte ET-NON 26 du premier du premier circuit de traitement 11, sa sortie $\overline{Q2}$ étant reliée à une entrée de la porte ET-NON 29. La sortie de la porte ET-NON 26 est reliée à une entrée de la porte ET-NON 27 dont une autre entrée reçoit le signal d'horloge reconstitué w1; la sortie de la porte ET-NON 29 est reliée à une entrée de la porte ET-NON 30 dont une autre entrée reçoit le signal d'horloge reconstitué w2. La porte ET-NON 31 du circuit de sortie 13 a une entrée reliée à la sortie de la porte ET-NON 27 et une autre entrée reliée à la sortie de la porte ET-NON 30; sa sortie délivre le signal d'horloge w.

En désignant par A1 et A2 les signaux en sortie des portes ET-NON 27, 30, par C1 et C2 les signaux en sortie des portes ET-NON 26, 29, par q1, $\overline{q1}$ les signaux sur les sorties Q1 et $\overline{Q1}$ de la bascule 25 et par q2, $\overline{q2}$ les signaux sur les sorties Q2 et $\overline{Q2}$ de la bascule 28, on a les équations logiques suivantes:

$$w = \overline{A1 \cdot A2} = \overline{A1} + \overline{A2}$$

$$\overline{A1} = C1 \cdot w1 \qquad \overline{A2} = C2 \cdot w2$$

$$C1 = q1 + \overline{q2} \qquad C2 = \overline{q1} + q2$$

et

$$w = (q1 + \overline{q2})w1 + (\overline{q1} + q2)w2 \quad (2)$$

les équations logiques (1) et (2) sont identiques, ce qui démontre l'équivalence des circuits des figures 2 et 3.

On va examiner à présent le fonctionnement du circuit de choix de la figure 3 dans les différents cas qui peuvent se présenter pour les signaux d'horloge reconstitués w1 et w2.

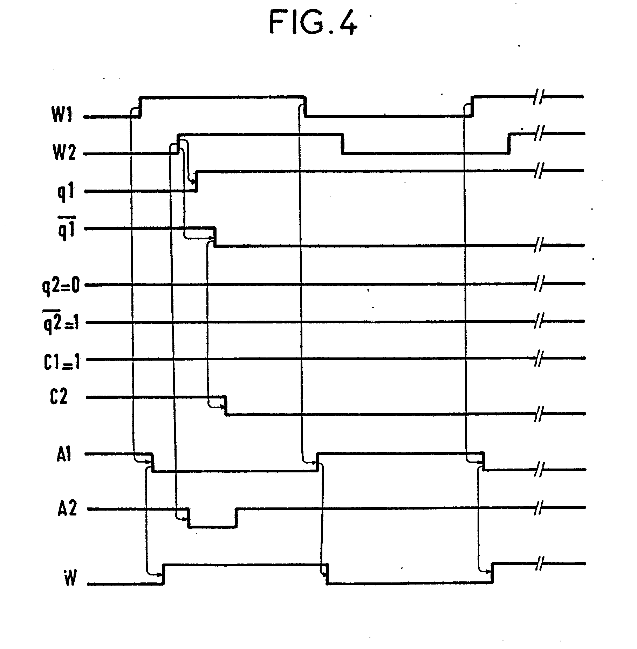

1) w1 et w2 sont présents et w1 est en avance sur w2. La figure 4 est un chronogramme qui représente les différents signaux dans le circuit de choix. Dès la mise sous tension de l'horloge dupliquée, donc du circuit de choix, w1 et w2 ayant la valeur 0 on a: q1=0, q2=0; donc $\overline{q1}$=1 et $\overline{q2}$=1, C1=1, C2=1, A1=1, A2=1 et w=0. Lorsque w1 passe à 1, cela entraine A1=0 et w=1, les autres signaux du circuit de choix ne changeant pas de valeur. Lorsque w2 passe a 1 cela entraîne q1=1, $\overline{q1}$=0 et A2=0; mais comme C2 passe à 0 lorsque $\overline{q1}$ est passé à 0, ce qui se produit donc avec un léger retard sur w2, A2 reprend la valeur 1.

Les signaux d'horloge reconstitués w1 et w2 étant établis et w1 étant en avance sur w2, les différents signaux du circuit de choix ne changent plus de valeur, sauf A1 qui prend la valeur 1 quand w1 passe à 0, et la valeur 0 quand w1 passe à 1. Le signal d'horloge w passe donc alternativement à 0 et à 1 au rythme de w1.

2) w1 est en avance sur w2 et tombe en panne.

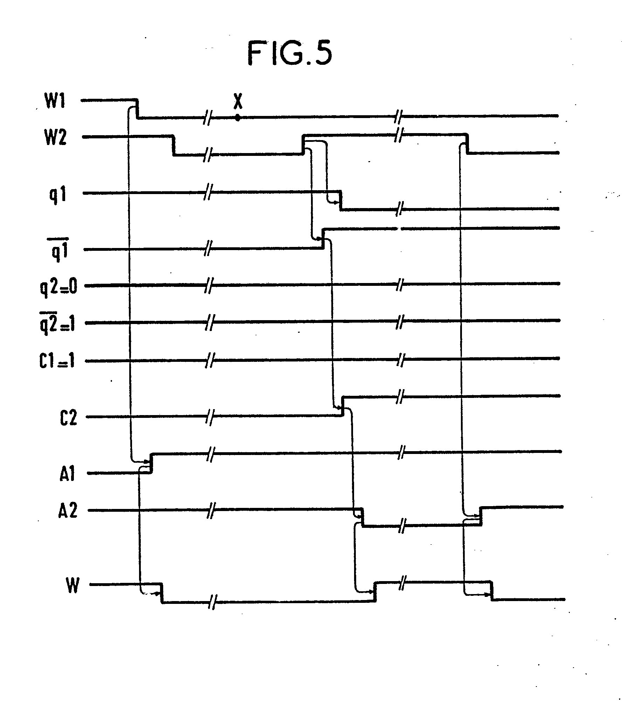

La figure 5 est un chronogramme qui représente les différents signaux dans le circuit de choix, le repère X indiquant l'apparition du défaut sur w1.

Jusqu'à l'apparition du défaut, les signaux ont les valeurs indiquées sur la figure 4, en régime établi.

Lorsque w1 tombe en panne, il prend la valeur 0, et par conséquent A1 reste à la valeur 1. Dès que se présente le premier passage de la valeur 0 à la valeur 1 pour w2 cela entraîne q1=0, $\overline{q1}$=1, C2=1, A2=0 et w=1. Lorsque w2 passe à 0, seul A2 passe à 1 ce qui entraîne w=0, les autres signaux dans le circuit de choix étant inchangés. On obtient donc un régime établi dans lequel A2 prend les valeurs 0 et 1 lorsque w2 prend les valeurs 1 et 0, w prenant alors les valeurs 1 et 0, au rythme de w2.

3) w1 reprend après panne et est en avance sur w2.

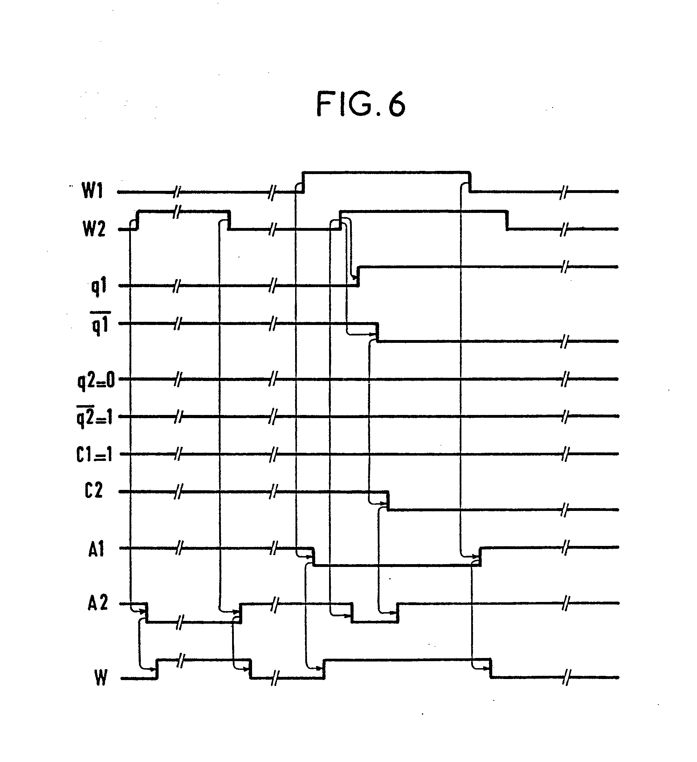

La figure 6 est un chronogramme qui représente les différents signaux dans le circuit de choix.

Lorsque w1 reprend, après panne, et est en avance sur w2, on se retrouve dans les mêmes conditions que celles du premier cas, lors de la mise sous tension, et le régime établi est le même que dans ce premier cas. Le signal d'horloge w se recale immédiatement sur w1.

Dans les trois cas de fonctionnement examinés ci-dessus on a supposé que w1 était en avance sur w2. Le cas où on aurait w2 en avance sur w1 se déduit aisément de l'examen du circuit de choix de la figure 3 et des chronogrammes des figures 4, 5, 6. Dans les chronogrammes, en remplaçant les différents signaux w1, w2, q1, $\overline{q1}$, q2, $\overline{q2}$, C1, C2, A1, A2, w par:

w2, w1, q2, $\overline{q2}$, q1, $\overline{q1}$, C2, C1, A2, A1, w, on obtient des chronogrammes qui s'appliquent, avec w2 en avance sur w1, aux mêmes cas que précédemment.

Les deux horloges de l'horloge dupliquée ayant chacune un circuit de choix, le signal d'horloge w délivré par chaque circuit de choix correspond donc à w1 si w1 est en avance sur w2, à w2 si w2 est en avance sur w1, et à w2 si w1 est en panne. On n'a pas examiné le cas ou w2 tombe en panne lorsque w1 est en avance sur w2, mais l'examen du chronogramme de la figure 4 montre que lorsque l'on est en régime établi, le signal A2 reste à 1 qu'elle que soit la valeur de w2; une panne sur w2 ne change donc pas le régime établi. Il en serait de même si w1 tombait en panne lorsque w2 est en avance sur w1.

Les circuits de choix illustrés par les figures 2 et 3 ne sont bien entendu que des exemples de réalisation et il est possible de remplacer les portes ET-NON ou des ensembles de telles portes par des portes ou des ensembles de portes équivalents, dès lors que l'on satisfait à l'équation logique 1 qui donne le signal d'horloge w délivré par le circuit de choix.

**Revendications**

1. Dispositif à horloge dupliquée à haute sécurité de fonctionnement comportant une première et une deuxième horloge, identiques, ayant chacune un circuit majoritaire recevant trois signaux d'horloge de trois bases de temps et délivrant un signal d'horloge majoritaire à un circuit de filtrage et de mise en forme qui délivre un signal d'horloge reconstitué, caractérisé par le fait qu'il comprend dans chaque horloge un circuit de choix (6) constitué par un premier (11) et un deuxième (12) circuit de traitement, identiques, et un circuit de sortie (13) relié en entrée à chacun des circuits de traitement, que chaque circuit de traitement est relié en entrée au circuit de filtrage et de mise en forme (4) de chacune des horloges (1, 2) et comporte une bascule (14) et des portes logiques (15, 16, 17), que la bascule (14) du premier circuit de traitement (11) a une entrée signal (D) reliée au circuit de filtrage et de mise en forme (4) de la première horloge (1) et une entrée horloge reliée au circuit de filtrage et de mise en forme (4) de la deuxième horloge (2), que la bascule (18) du deuxième circuit de traitement (12) a une entrée signal (D) reliée au circuit de filtrage et de mise en forme de la deuxième horloge (2), et une entrée horloge reliée au circuit de filtrage et de mise en forme (4) de la première horloge (1), et que le circuit de choix (6) réalise l'équation logique

$$w=(q1+\overline{q2}) \cdot w1 + (\overline{q1}+q2) \cdot w2$$

dans laquelle

— w est un signal d'horloge délivré par le circuit de choix

— w1 et w2 sont respectivement, les signaux d'horloge reconstitués des deux horloges,

— q1 et $\overline{q1}$ sont des signaux de sortie direct et inverse de la bascule du premier circuit de traitement,

— q2 et $\overline{q2}$ sont des signaux de sortie direct et inverse de la bascule du second circuit de traitement.

2. Dispositif selon la revendication 1, caractérisé par le fait que la bascule (14) du premier circuit de traitement (11) a une sortie directe (Q1) reliée à une entrée d'une première porte ET-NON (15) ayant une autre entrée reliée au circuit de filtrate et de mise en forme (4) de la première horloge (1) et une sortie inverse ($\overline{Q1}$) reliée à une entrée d'une deuxième porte ET-NON (16) ayant une autre entrée reliée au circuit de filtrate et de mise en forme (4) de la deuxième horloge (2), qu'une troisième porte ET-NON (17) a une entrée reliée à la première porte ET-NON (15) et une autre entrée reliée à la deuxième porte ET-NON (16), que la bascule (18) du deuxième circuit de traitement (12) a une sortie directe (Q2) reliée à une entrée d'une quatrième porte ET-NON (19) dont une autre entrée est reliée au circuit de filtrage et de mise en forme (4) de la deuxième horloge (2) et une sortie inverse ($\overline{Q2}$) reliée à une entrée d'une cinquième porte ET-NON (20) ayant une autre entrée reliée au circuit, de filtrage et de mise en forme (4) de la première horloge (1), qu'une sixième porte ET-NON (21) a une entrée reliée à la quatrième porte ET-NON (19), et une autre entrée reliée à la cinquième porte ET-NON (20), et que le circuit de sortie (13) est constitué par une porte OU (22) ayant une entrée reliée à la troisième porte ET-NON (17) et une autre entrée reliée à la sixième porte ET-NON (21).

3. Dispositif selon la revendication 1, caractérisé par le fait que le premier circuit de traitement (11) comporte une bascule (25), une première (26) et une deuxième (27) porte ET-NON, que le deuxième circuit de traitement (12) comporte une bascule (28), une troisième (29) et une quatrième (30) porte ET-NON, que la bascule (25) a une sortie directe (Q1) reliée à une entrée de la troisième porte ET-NON (29) et une sortie inverse ($\overline{Q1}$) reliée à une entrée de la première porte ET-NON (26), que la bascule (28) à une sortie directe (Q2) reliée à une autre entrée de la première porte ET-NON (26) et une sortie inverse ($\overline{Q2}$) reliée à une autre entrée de la troisième porte ET-NON (29), que la deuxième porte ET-NON (27) a une entrée reliée à la première porte ET-NON (26) et une autre entrée reliée au circuit de filtrage et de mise en forme (4) de la première horloge (1), que la quatrième porte ET-NON (30) a une entrée reliée à la troisième porte ET-NON (29) et une autre entrée reliée au circuit de filtrage et de mise en forme (4) de la deuxième horloge (2), et que le circuit de sortie (13) est constitué par une porte ET-NON (31) ayant une entrée reliée à la deuxième porte ET-NON (27) et une autre entrée reliée à la quatrième porte ET-NON (30).

**Patentansprüche**

1. Vorrichtung mit doppeltem Taktgeber von hoher Betriebssicherheit, die einen ersten und einen zweiten Taktgeber aufweist, welche identisch sind und je einen Mehrheitsschaltkreis aufweisen, der drei Taktsignale von drei Zeitbasen erhält und ein Mehrheitstaktsignal an einen Filter- und Impulsformungsschaltkreis liefert, der ein aufbereitetes Taktsignal liefert, dadurch gekennzeichnet, daß sie in jedem Taktgeber einen Wahlschaltkreis (6) aufweist, der aus zwei gleichen Verarbeitungskreisen (11 und 12) und einem Ausgangskreis (13) besteht, der eingangsseitig an jeden der Verarbeitungskreise angeschlossen ist, daß jeder Verarbeitungskreis eingangsseitig an den Filter- und Impulsformungsschaltkreis (4) jedes der Taktgeber (1, 2) angeschlossen ist und eine Kippstufe (14) und Logiktore (15, 16, 17) aufweist, daß die Kippstufe (14) des ersten Verarbeitungskreises (11) einen Signaleingang (D), der mit dem Filter- und Impulsformungsschaltkreis (4) des ersten Taktgebers (1) verbunden ist, und einen Takteingang besitzt, der mit dem Filter- und Impulsformungsschaltkreis (4) des zweiten Taktgebers (2) verbunden ist, daß die Kippstufe (18) des zweiten Verarbeitungskreises (12) einen Signaleingang (D), der mit dem Filter- und Impulsformungsschaltkreis des zweiten Taktgebers (2) verbunden ist, und einen Takteingang besitzt, der mit dem Filter- und Impulsformungsschaltkreis (4) des ersten Taktgebers verbunden ist, und daß der Wahlschaltkreis (6) die logische Gleichung

$$w = (q1 + \overline{q2}) \cdot w1 + (\overline{q1} + q2) \cdot w2$$

durchführt, in der

— w ein vom Wahlschaltkreis geliefertes Taktsignal ist,

— w1 und w2 je die aufbereiteten Taktsignale der beiden Taktgeber sind,

— q1 und $\overline{q1}$ das direkte und das invertierte Ausgangssignal der Kippstufe des ersten Verarbeitungskreises sind,

— q2 und $\overline{q2}$ das direkte und das invertierte Ausgangssignal der Kippstufe des zweiten Verarbeitungskreises bedeuten.

2. Vorrichtung nach Anspruch 1, dadurch gekennzeichnet, daß die Kippstufe (14) des ersten Verarbeitungskreises (11) einerseits einen direkten Ausgang (Q1), der mit einem Eingang eines ersten UND-NICHT Tores (15) verbunden ist, von dem ein anderer Eingang mit dem Filter- und Impulsformungsschaltkreis (4) des ersten Taktgebers (1) verbunden ist, und andererseits einen invertierten Ausgang ($\overline{Q1}$) aufweist, der mit einem Eingang eines zweiten UND-NICHT Tores (16) verbunden ist, von dem ein anderer Eingang mit dem Filter- und Impulsformungsschaltkreis (4) des zweiten Taktgebers (2) verbunden ist, daß ein drittes UND-NICHT Tor (17) mit einem Eingang an das erste UND-NICHT Tor (15) und mit einem anderen Eingang an das zweite UND-NICHT Tor (16) angelegt ist, daß die Kippstufe (18) des zweiten Verarbeitungskreises (12) einerseits einen direkten Ausgang (Q2), der an einen Eingang eines vierten UND-NICHT Tores (19) angeschlossen ist, von dem ein anderer Eingang an den Filter- und Impulsformungsschaltkreis (4) des zweiten Taktgebers (2) angeschlossen ist, und andererseits einen invertierten Ausgang (Q̄2) aufweist, der an einen Eingang eines fünften UND-NICHT Tores (20) angeschlossen ist, das mit einem anderen Eingang an den Filter- und Impulsformungsschaltkreis (4) des ersten Taktgebers (1) angeschlossen ist, daß ein sechstes UND-NICHT Tor (21) mit einem Eingang an das vierte UND-NICHT Tor (19) und mit einem anderen Eingang an das fünfte UND-NICHT Tor (20) angeschlossen ist, und daß der Ausgangskreis (13) aus einem ODER Tor (22) besteht, von dem ein Eingang mit dem dritten UND-NICHT Tor (17) und ein anderer Eingang mit dem sechsten UND-NICHT Tor (21) verbunden ist.

3. Vorrichtung nach Anspruch 1, dadurch gekennzeichnet, daß der erste Verarbeitungskreis (11) eine Kippstufe (25), ein erstes (26) und ein zweites UND-NICHT Tor (27) aufweist, daß der zweite Verarbeitungskreis (12) eine Kippstufe (28), ein drittes (29) und ein viertes UND-NICHT Tor (30) aufweist, daß die Kippstufe (25) mit einem direkten Ausgang (Q1) an einen Eingang des dritten UND-NICHT Tores (29) und mit einem invertierten Ausgang (Q̄1) an einen Eingang des ersten UND-NICHT Tores (26) angeschlossen ist, daß die Kippstufe (28) mit einem direkten Ausgang an einen anderen Eingang des ersten UND-NICHT Tores (26) und mit einem invertierten Ausgang (Q̄2) an einen anderen Eingang des dritten UND-NICHT Tores (29) angeschlossen ist, daß das zweite UND-NICHT Tor (27) mit einem Eingang an das erste UND-NICHT Tor (26) und mit einem anderen Eingang an den Filter- und Impulsformungsschaltkreis (4) des ersten Taktgebers (1) angeschlossen ist, daß das vierte UND-NICHT Tor (30) mit einem Eingang an das dritte UND-NICHT Tor (29) und mit einem anderen Eingang an den Filter- und Impulsformungsschaltkreis (4) des zweiten Taktgebers (2) angeschlossen ist, und daß der Ausgangskreis (13) aus einem UND-NICHT Tor (31) besteht, von dem ein Eingang mit dem zweiten UND-NICHT Tor (27) und ein anderer Eingang mit dem vierten UND-NICHT Tor (30) verbunden ist.

**Claims**

1. A device with a duplicated clock of high operational security, comprising identical first and second clocks, each of which includes a majority logic circuit receiving three clock signals from three timebases and delivering a majority clock signal to a filter and signal shaping circuit which produces a reconstituted clock signal, characterized in that it comprises in each clock a selector circuit (6) constituted by identical first (11) and second processing circuits (12) and an output circuit (13) which has a respective input connected to each of said processing circuits, that each processing circuit has a respective input connected to the filter and signal shaping circuit (4) of each clock (1, 2) and comprises a bistable (14) and logic gates (15, 16, 17), that the bistable (14) of the first processing circuit (11) has a signal input (D) connected to said filter and signal shaping circuit (4) of the first clock (1), and a clock input connected to said filter and signal shaping circuit (4) of the second clock (2), that the bistable (18) of the second processing circuit (12) has a signal input (D) connected to the filter and signal shaping circuit (4) of the second clock (2), and a clock input connected to the filter and signal shaping circuit (4) of the first clock (1), and that the selector circuit (6) implements the logic equation:

$$w=(q1+\overline{q2}) \cdot w1+(\overline{q1}+q2)-w2$$

in which

— w is a clock signal furnished by the selector circuit,
— w1 and w2 are the reconstituted clock signals produced by the first and second clocks, respectively,
— q1 and q̄1 are the direct and inverted output signals of the bistable of the first processing circuit,
— q2 and q̄2 are the direct and inverted output signals of the bistable of the second processing circuit.

2. A device according to claim 1, characterized in that the bistable (14) of the first processing circuit (11) has a direct output (Q1) connected to an input of a first NAND gate (15) which has another input connected to the filter and signal shaping circuit (4) of the first clock (1), and an inverted output (Q̄1) connected to an input of a second NAND gate (16) which has another input connected to the filter and signal shaping circuit (4) of the second clock (2), that a third NAND gate (17) has an input connected to the first NAND gate (15) and another input connected to the second NAND gate (16), that the bistable (18) of the second processing circuit (12) has a direct output (Q2) connected to an input of a fourth NAND gate (19) which has another input connected to the filter and signal shaping circuit (4) of the second clock (2), and an inverted output (Q̄2) connected to an input of a fifth NAND gate (20) which has another input connected to the filter and signal shaping circuit (4) of the first clock (1), that a sixth NAND gate (21) has an input connected to the fourth NAND gate (19) and another input connected to the fifth NAND gate (20), and that the output circuit (13) comprises an OR gate (22) having an input connected to the third NAND gate (17) and another input connected to the sixth NAND gate (21).

3. A device according to claim 1, characterized in that the first processing circuit (11) comprises a bistable (25) and first (26) and second NAND gates (27), that the second processing circuit (12) comprises a bistable (28) and third (29) and fourth NAND gates (30), that the bistable (25) has a direct output (Q1) connected to an input of the third NAND gate (29) and an inverted output ($\overline{Q1}$) connected to an input of the first NAND gate (26), that the bistable (28) has a direct output (Q2) connected to another input of the first NAND gate (26) and an inverted output ($\overline{Q2}$) connected to another input of the third NAND gate (29), that the second NAND gate (27) has an input connected to the first NAND gate (26) and another input connected to the filter and signal shaping circuit (4) of the first clock (1), that the fourth NAND gate (30) has one input connected to the third NAND gate (29) and another input connected to the filter and signal shaping circuit (4) of the second clock (2), and that the output circuit (13) comprises a NAND gate (31) which has one input connected to the second NAND gate (27) and another input connected to the fourth NAND gate (30).

FIG.1

0 065 711

# FIG. 2

# FIG.3

# FIG.4

# FIG.5

# FIG.6